# EUROPÄISCHE PATENTSCHRIFT

(11) **EP 0 667 668 B1**
(45) Veröffentlichungstag und Bekanntmachung des Hinweises auf die Patenterteilung: **06.08.1997**
(21) Anmeldenummer: 94118094.5
(22) Anmeldetag: 17.11.1994
(51) Int. Cl.: H02K 5/128, F04D 13/06

(54) **Verfahren zum Herstellen eines Spalttopfes aus Faserverbundwerkstoff**
Method of manufacturing a fibre reinforced airgap hood
Méthode de fabrication d'une chemise d'entrefer en matériaux composites

(30) Priorität: 10.02.1994 DE 4404235
(43) Veröffentlichungstag der Anmeldung: 16.08.1995
(73) Patentinhaber: Dr. Bäumer, Thomas, 41836 Hückelhoven (DE)
(72) Erfinder: Dr. Bäumer, Thomas, 41836 Hückelhoven (DE)

(56) Entgegenhaltungen:
- EP-A- 0 353 346
- EP-A- 0 502 796
- DE-C- 3 823 113
- FR-A- 2 672 344
- US-A- 4 111 237

## Beschreibung

Die Erfindung betrifft ein Verfahren zum Herstellen eines Spalttopfes aus Faserverbundwerkstoff gemäß dem Oberbegriff von Patentanspruch 1.

Derartige Spalttöpfe werden in elektrischen oder magnetischen Antriebsaggregaten eingesetzt, wie sie z. B. aus der DE 36 36 404 A1 für den Antrieb einer Magnetkreiselpumpe bekannt sind.

Ein Verfahren zur Herstellung eines Spalttopfes aus Faserverbundwerkstoff mit integralem Anschlußflansch und Topfboden nach der Wickelmethode ist aus der DE 38 23 113 C1 bekannt. Dabei wird ein Wickeldorn mit einem zylindrischen Teil und einer stirnseitigen Polkappe verwendet, wobei die Kontur der Polkappe der Innenkontur des Topfbodens entspricht. Der Topfmantel wird aus kunstharzgetränkten Schichten von Umfangs- und Helixwicklungen gewickelt; zur Herstellung des Topfbodens werden die Fasern für die Helixwicklungen radial um die Polkappe geführt. Der Anschlußflansch kann durch zusätzliche Umfangswicklungen hergestellt werden, z. B. nach einer Methode, wie sie in der DE 39 22 335 C1 dargestellt und beschrieben ist. Nach dem Aushärten des Harzes werden der Wickeldorn und ggf. weitere Formteile entfernt. Die so hergestellten Spalttöpfe haben bezüglich ihres zylindrischen Teils eine hohe Festigkeit und Formbeständigkeit. Vor allem in den Übergangszonen zum Topfboden und zum Anschlußflansch hin ist jedoch die zulässige Belastbarkeit geringer, wodurch bei hohen Beanspruchungen die Gesamtbelastbarkeit dieser Spalttöpfe begrenzt wird. Ähnliche Probleme treten auch bei einem Spalttopf gemäß der DE 38 18 832 C2 auf, bei dem der Topfboden in den Topfmantel eingeklebt ist.

Aus der FR-2 672 344 A1 ist ein Verfahren zur Herstellung eines Spalttopfes bekannt, bei dem vorimprägnierte Zuschnitte aus einem Karbonfasergewebe zwischen die Patrize und die Matrize einer Form gespannt und durch Erhitzen ausgehärtet werden. Dabei werden für den Topfboden und für den Topfflansch kreis- und ringscheibenförmige Zuschnitte und für den Topfzylinder ein aufzurollendes Band verwendet. Diese Teile werden sandwichartig eingeschlossen zwischen band- und kreuzförmigen Zuschnitten, die sich vom Topfboden aus axparallel über den Topfzylinder bis zur Peripherie des Topfflansches erstrecken. Bei dieser Anordnung und Art von Zuschnitten nimmt das aufzurollende Band für den Topfzylinder im wesentlichen radiale Kräfte auf und trägt somit nichts bei zur Aufnahme der Zug- und Biegekräfte in den vorerwähnten Übergangszonen. Dies bedeutet entweder eine unerwünschte Erhöhung der Lagen an z. B. kreuzförmigen Zuschnitten oder eine - im Vergleich zu der radialen Belastbarkeit - verminderte Gesamtbelastbarkeit.

Die Erfindung hat zur Aufgabe, für die Herstellung von Spalttöpfen aus Faserverbundwerkstoff mit integralem Topfboden und Anschlußflansch ein Verfahren anzugeben, mit dem vor allem in den Übergangszonen zwischen zylindrischem Teil und Topfboden bzw. Anschlußflansch eine im Vergleich zum Stande der Technik höhere Belastbarkeit der Spalttöpfe erzielt wird bei möglichst geringer Wandstärke.

Zur Lösung dieser Aufgabe werden die in von Patentanspruch 1 angegebenen Verfahrensschritte vorgeschlagen. Die hierauf bezogenen Unteransprüche beinhalten vorteilhafte Ausgestaltungen dieser Lösung.

Durch das Drapieren der Enden des Geflechtschlauches über die Übergangszonen bis hin zum Topfboden bzw. Anschlußflansch in Verbindung mit den quasiisotropen, überlappenden Gewebelagen für den Topfboden und den Anschlußflansch erhalten die Fasern eine optimale, belastungsgerechte Orientierung in Richtung der Hauptkraftflüsse. Dadurch können vor allem in den vorerwähnten Übergangszonen höhere Zug- und Biegebelastungen aufgenommen werden.

Einzelheiten der Erfindung werden im folgenden anhand der Figuren erläutert.
Die Figur 1 veranschaulicht das Herstellungsverfahren;
die Figur 2 zeigt einen Schnitt durch den erfindungsgemäß hergestellten Spalttopf mit abgetrennten Außenformteilen.

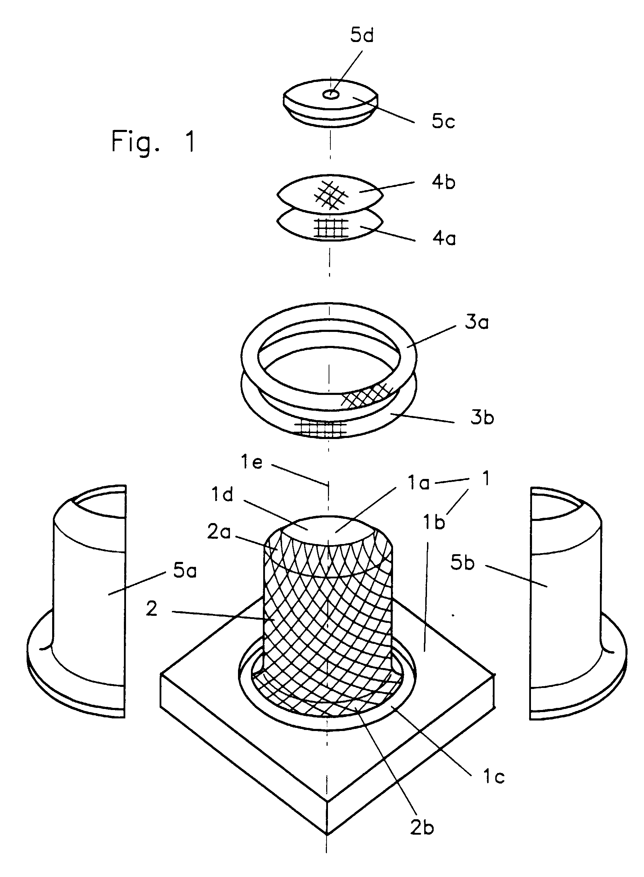

Die Figur 1 zeigt ein Innenformteil 1, bestehend aus einem Formzapfen 1a und einer hiermit fest verbundenen Aufspannplatte 1b. Die Formflächen des Formzapfens 1a entsprechen der Innenform von zylindrischem Teil und Topfboden des herzustellenden Spalttopfes. Die Aufspannplatte 1b weist eine ringscheibenförmige Ausnehmung 1c auf, die zur Formung des Anschlußflansches für den Spalttopf dient.

Über den Formzapfen 1a werden eine oder mehrere Lagen 2 eines Geflechtschlauches gestülpt. Die Fasern dieses Geflechts sind so orientiert, daß sie mit der Längsachse 1e des Formzapfens 1a einen Winkel zwischen ± 40° bis ± 70° einschließen; als optimal hat sich aufgrund der "Kessel-Formel" ein Winkel von ± 56° erwiesen.

Wie weiterhin aus Figur 1 zu ersehen ist, werden die Fasern an den beiden stirnseitigen Enden 2a, 2b des Geflechtschlauches unter Einhalten einer Übergangskrümmung zum Boden 1d des Formzapfens 1a hin bzw. radial nach außen in die ringscheibenförmige Ausnehmung 1c der Aufspannplatte 1b drapiert. Die ringscheibenförmige Ausnehmung 1c wird mit mehreren ringscheibenförmigen Gewebelagen 3a, 3b belegt, die sich mit dem Ende 2b des Geflechtschlauches überlappen bzw. dieses Ende 2b zwischen sich einschließen. Diese Gewebelagen 3a, 3b sind so geschnitten und übereinandergelegt, daß die Fasern in Bezug auf den auszubildenden Anschlußflansch quasiisotop orientiert sind.

In entsprechender Weise wird der Boden 1d des Formzapfens 1a mit kreisscheibenförmigen Gewebelagen 4a, 4b belegt, die sich mit dem Ende 2a des Geflechtschlauchs überlappen bzw. dieses Ende 2a zwischen sich einschließen. Die Fasern der Gewebelagen 3a, 3b, bzw. 4a, 4b kreuzen sich rechtwinklig.

Sodann wird das aus dem Formzapfen 1a und der Aufspannplatte 1b bestehende Innenformteil 1 mit mehreren Außenformteilen, bestehend aus einer zweiteiligen Muffe 5a, 5b und einem Deckel 5c verspannt in der Weise, daß ein Zwischenraum verbleibt, der der Gestalt des herzustellenden Spalttopfes entspricht (die Spannelemente sind aus Gründen der besseren Übersichtlichkeit nicht dargestellt).

Hierauf wird über eine Öffnung 5d im Deckel 5c der Zwischenraum mit duroplastischem Kunstharz ausgefüllt. In den Formteilen 5a, 5b, 1b sind zusätzliche Öffnungen (nicht dargestellt) vorgesehen zur Kontrolle einer vollständigen und blasenfreien Kunstharzfüllung des Zwischenraumes. Dabei wird das Volumenverhältnis von Fasermaterial zu Kunstharzmatrix in dem Zwischenraum auf etwa 60 Vol-% zu 40 Vol-% eingestellt.

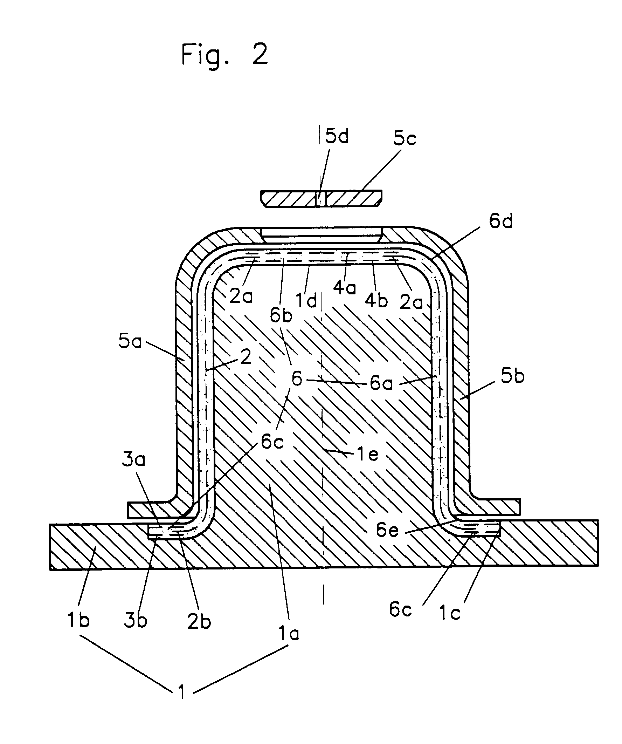

Die Figur 2 zeigt im Längsschnitt den fertigen Spalttopf 6, bestehend aus zylindrischem Teil 6a, Topfboden 6b und Anschlußflansch 6c, in deren Kunstharzmatrix die Fasern belastungsorientiert eingebettet sind, wobei insbesondere auch die Fasern in den Übergangsbereichen 6d, 6e belastungsgerecht orientiert sind. Der zylindrische Teil 6a des Spalttopfes 6 hat eine Wandstärke von ca. 2 mm und enthält drei Lagen 2 eines Geflechtschlauches. Topfboden 6b und Anschlußflansch 6c enthalten mindestens je zwei Gewebelagen 3a, 3b bzw. 4a, 4b. Als Fasern für das Geflecht und das Gewebe eignen sich z. B. Kohlenstoffasern; für das Matrixsystem können neben Epoxidharzen auch chemisch resistentere Phenolharze oder Furanharze verwendet werden.

Wie aus der Figur zu ersehen ist, sind die Formhalbschalen 5a, 5b und der eingepaßte Deckel 5c bereits von dem Spalttopf 6a, 6b, 6c getrennt. Nach der Entnahme des Spalttopfes 6 aus der Aufspannplatte 1b und dem Formzapfen 1a kann der Spalttopf im Bedarfsfalle noch mechanisch nachgearbeitet werden.

### Bezugszeichenliste:

- 1: Innenformteil
- 1a: Formzapfen des Innenformteils 1
- 1b: Aufspannplatte des Innenformteils 1
- 1c: ringscheibenförmige Ausnehmung
- 1d: Boden des Formzapfens 1a
- 1e: Längsachse des Formzapfens 1a bzw. Spalttopfs 6
- 2: Lagen eines Geflechtschlauches
- 2a: stirnseitige Enden des Geflechtschlauches
- 2b: stirnseitige Enden des Geflechtschlauches
- 3a: ringscheibenförmige Gewebelagen
- 3b: ringscheibenförmige Gewebelagen
- 4a: kreisscheibenförmige Gewebelagen
- 4b: kreisscheibenförmige Gewebelagen
- 5: Außenformteil
- 5a: Muffen des Außenformteils 5
- 5b: Muffen des Außenformteils 5
- 5c: Deckel des Außenformteils 5
- 5d: Öffnung im Deckel 5c
- 6: Spalttopf
- 6a: zylindrischer Teil
- 6b: Topfboden
- 6c: Anschlußflansch
- 6d: Übergangsbereich zwischen zylindrischem Teil 6a und dem Topfboden 6b des Spalttopfes 6
- 6e: Übergangsbereich zwischen zylindrischem Teil 6a und dem Anschlußflansch 6c des Spalttopfes 6

## Patentansprüche

1. Verfahren zum Herstellen eines Spalttopfes aus Faserverbundwerkstoff mit einem zylindrischen Teil, einem Topfboden und einem Anschlußflansch, unter Verwendung von Formteilen, die nach dem Aushärten der Kunststoffmatrix entfernt werden, umfassend folgende Verfahrensschritte:
a) über ein Innenformteil (1a, 1b), dessen Formflächen der Innenform einschließlich der hieran anschließenden Flanschoberfläche des Spalttopfes (6) entsprechen, werden eine oder mehrere Lagen (2) eines Geflechtschlauches gestülpt, dessen Fasern mit der Spalttopflängsachse (1e) einen Winkel zwischen ± 40° bis ± 70° einschließen;
b) an den beiden stirnseitigen Enden (2a, 2b) des Geflechtschlauches werden die Fasern unter Einhalten einer Übergangskrümmung radial nach innen zum Boden (1d) des Innenformteils (1) hin bzw. radial nach außen in eine ringscheibenförmige Ausnehmung (1c) des Innenformteils (1a, 1b) drapiert;
c) der Boden (1d) des Innenformteils wird mit kreisscheibenförmigen Gewebelagen (4a, 4b) und die Ausnehmung (1c) des Innenformteils mit ringscheibenförmigen Gewebelagen (3a, 3b) belegt, wobei sich diese Gewebelagen (3a, 3b, 4a, 4b) mit den jeweiligen Enden (2a, 2b) der Lagen (2) des Geflechtschlauches überlappen, und wobei die Fasern der Gewebelagen (3a, 3b, 4a, 4b) quasiisotrop orientiert werden;
d) ein ein- oder mehrteiliges Außenformteil (5a, 5b, 5c), dessen Formflächen der Außenform des Spalttopfes (6) entsprechen, wird unter Einhalten eines die Gestalt des Spalttopfes (6) bestimmenden Zwischenraums mit dem Innenformteil (1a, 1b) verspannt, worauf
e) der Zwischenraum mit härtbarem, fließfähigem Kunststoff gefüllt und nach dem Aushärten die Formteile (1, 5) von dem fertigen Spalttopf (6) getrennt werden.

2. Verfahren nach Anspruch 1, dadurch gekennzeichnet, daß die Fasern des Gewebeschlauches mit der Spalttopflängsachse (1e) einen Winkel von ± 56° einschließen.

3. Verfahren nach Anspruch 1, dadurch gekennzeichnet, daß das Verhältnis des Fasermaterials zur Kunststoffmatrix auf 60 Vol.-% zu 40 Vol.-% eingestellt wird.

## Claims

1. Process for the production of a gap-pot from a fibre-composite material with a cylindrical part, a bottom portion and a connection flange using moulds, which will be removed after the curing of the plastic matrix, including the following process steps:
a) One or several layers (2) of a braided tube are drawn over an inner mould (1a, 1b), the surfaces of which correspond to the internal part including the adjacent flange surface of the gap-pot (6), with the fibres of the braided tube and the longitudinal axis of the gap-pot (1e) forming an angle between ±40 and ±70 deg.
b) At both ends (2a, 2b) of the braided tube, the fibres are arranged under a certain transition bending angle radially either towards the interior bottom portion (1d) of the inner mould (1) or towards the exterior circumferential groove (1c) surrounding the inner mould (1a, 1b).
c) The bottom portion (1d) of the inner mould is covered by circumferential fabric layers (4a, 4b), while the groove is covered by annular fabric layers (3a, 3b). These fabric layers (3a, 3b, 4a, 4b) overlap the ends (2a, 2b) of the layers (2) of the braided tube with the fibres of the fabric layers (3a, 3b, 4a, 4b) being oriented quasi-isotropically.
d) The surfaces of the external mould (5a, 5b, 5c), which consists of one or several parts, correspond to the outer shape of the gap-pot (6). This external mould is fastened to the inner mould (1a, 1b) while maintaining the gap determining the shape of the gap-pot (6).
e) Then, the gap is filled with a curable and flowable plastic. Following curing, the moulds (1, 5) are removed from the freshly produced gap-pot (6).

2. Process according to claim 1, characterised by the fibres of the braided tube and the longitudinal axis of the gap-pot (1e) forming an angle of ±56 deg.

3. Process according to claim 1, characterised by the ratio of the fibre material and the plastic matrix being set to 60 vol.% to 40 vol.%.

## Revendications

1. Procédé de fabrication d'un pot d'entrefer en matériau composite renforcé par des fibres, comportant une partie cylindrique, une partie de fond et une bride de raccordement, en utilisant des pièces de moulage à enlever après le durcissement de la matrice plastique et qui comprend les opérations suivantes:
a) Une pièce de moulage intérieure (1a, 1b) dont le plan de moulage correspond à la forme intérieure y comprise la surface contigue de la bride du pot d'entrefer (6), est recouverte d'une ou de plusieurs couches (2) d'une gaine tressée dont les fibres incluent un angle de ± 40° jusqu'à ± 70° avec l'axe longitudinal du pot d'entrefer (1e);
b) aux deux extrémités du côté frontal (2a, 2b) de la gaine tressée, les fibres sont drapées radialement vers l'intérieur vers le fond (1d) de la pièce de moulage intérieure (1) ou, respectivement, radialement vers l'extérieur, dans un creux de forme annulaire (1c) de la pièce de moulage intérieure (1a, 1b), en observant un coude de raccord;
c) le fond (1d) de la pièce de moulage intérieure est recouvert de couches de tissu de forme circulaire (4a, 4b), et le creux (1c) de la pièce de moulage intérieure est recouvert de couches de tissu annulaires (3a, 3b, 4a, 4b) chevauchant les extrémités respectives (2a, 2b) des couches (2) de la gaine tressée, les fibres des couches de tissu (3a, 3b, 4a, 4b) étant orientées quasi-isotropiquement;
d) une pièce de moulage extérieure en un ou plusieurs éléments (5a, 5b, 5c) dont les plans de moulage correspondent à la forme extérieure du pot d'entrefer (6), est serrée à la pièce de moulage intérieure (1a,1b) en respectant un espace déterminant la forme du pot d'entrefer (6), après quoi
e) l'espace est rempli de matière plastique durcissable, coulant, les pièces de moulage (1, 5) sont séparées du pot d'entrefer (6) fini.

2. Procédé selon la revendication 1, caractérisé en ce que les fibres de la gaine tressée incluent un angle de ± 56° avec l'axe longitudinal (1e) du pot d'entrefer.

3. Procédé selon la revendication 1, caractérisé en ce que le rapport entre le matériau de fibre et la matrice plastique est réglé à 60% vol. à 40% vol.
